# FASCICULE DE BREVET EUROPEEN

(11) **EP 3 945 850 B1**
(45) Date de publication et mention de la délivrance du brevet: **05.08.2026**
(21) Numéro de dépôt: 20721103.8
(22) Date de dépôt: 25.03.2020
(51) Int. Cl.: C02F 1/32, A23B 2/00, A23B 2/53, A23B 2/60, A23B 70/50, C12H 1/16, C12G 3/08, C02F 1/48, C12G 1/00

(54) **DISPOSITIF DE TRAITEMENT DES LIQUIDES PAR ÉLECTROMAGNÉTISME ET BRASSAGE**
VORRICHTUNG ZUR BEHANDLUNG VON FLÜSSIGKEITEN DURCH ELEKTROMAGNETISMUS UND RÜHREN
DEVICE FOR TREATING LIQUIDS BY ELECTROMAGNETISM AND STIRRING

(30) Priorité: 26.03.2019 CH 3932019
(43) Date de publication de la demande: 09.02.2022
(73) Titulaire: Seduna SCT SA, 1227 Carouge (CH)
(72) Inventeur: VARONE, Jean-Daniel, 1950 Sion (CH)
(74) Mandataire: P&TS SA (AG, Ltd.)
(86) Numéro de dépôt international: PCT/IB2020/052808
(87) Numéro de publication internationale: WO 2020/194206

(56) Documents cités:
- EP-A2- 2 711 075
- WO-A1-2014/079809
- CN-U- 206 887 079
- US-A- 5 997 812

## Description

### Domaine technique

La présente invention concerne un dispositif pour le traitement des fluides, notamment pour le traitement des fluides alimentaires tels que les vins ou les alcools distillés. Le dispositif comporte un élément de brassage et au moins un élément magnétique, disposé de manière à combiner leurs effets sur les fluides à traiter.

### Etat de la technique

Des dispositifs de traitement des fluides impliquant des vortex sont déjà connus. Le document US2004124136 présente par exemple un tel dispositif pour la purification de l'eau. De tels dispositifs peuvent cependant être difficilement appliqués à des fluides alimentaires et complexes tels que le vin ou les alcools distillés. Les effets de brassages peuvent en effet être préjudiciables aux caractéristiques organoleptiques de tels breuvages.

Les documents CN206887079H, WO2014/079809 A1, et US5997812 A décrivent des systèmes de traitement de fluides alimentaires guidés dans un tube et soumis à des champs magnétiques.

Des générateurs de champs magnétiques peuvent également être utilisés pour le traitement de fluides. Les champs magnétiques sont par exemple exploités en relation avec les fluides électriquement conducteurs dans des dispositifs tels que des convertisseurs magnetohydrodynamiques (MHD), et permettant de mettre les fluides en mouvement. Des effets de passivation de l'eau sous l'influence de tels convertisseurs magnetohydrodynamiques ont été décrits. L'application de champs magnétiques sur du vin est également décrit dans le document US20030003189 comme bénéfique pour adoucir certains paramètres gustatifs tels que l'acidité ou l'astringence.

Il y a cependant matière à améliorer de tels procédés, notamment pour maitriser le potentiel organoleptique et l'évolution des propriétés du breuvage dans le temps, tant du point de vue gustatif que de la texture. La présente invention a pour objectif notamment de développer, de stabiliser, ou d'optimiser le potentiel organoleptique de fluides complexes comme le vin ou les alcools distillés.

### Bref résumé de l'invention

Un but de la présente invention est de proposer un dispositif de traitement des fluides alimentaires, tels que du vin ou d'autres alcools fermentés, ou des alcools distillés, pour préserver, améliorer ou stabiliser leurs propriétés organoleptiques et leur évolution dans le temps. La présente invention permet en l'occurrence de limiter ou de supprimer tout ou partie des additifs liés à la conservation des breuvages. Les additifs liés à la conservation des breuvages incluent les sulfites sans pour autant s'y limiter. La préservation du breuvage inclut la stabilisation tartrique le cas échéant. La préservation, l'amélioration ou la stabilisation de tels breuvages inclut également l'augmentation ou la diminution de la concentration de gaz dissouts, notamment l'oxygène.

D'une façon plus générale, l'objectif de la présente invention est de maitriser le potentiel organoleptique de breuvages tels que le vin ou autres alcools fermentés tels que la bière, ou les alcools distillés. Le fait de maitriser de telles propriétés inclut le fait de les adapter à un public déterminé, d'en corriger les défauts éventuels, d'amoindrir ou d'accentuer certaines caractéristiques, de créer des caractéristiques organoleptiques inédites ou peu connues, sans pour autant se limiter à ces seuls aspects. La maitrise des propriétés organoleptiques d'un tel breuvage inclut son affinage aromatique. La maitrise des propriétés organoleptiques inclut également l'élimination ou la diminution de l'astringence, de l'acidité, ou d'autres aspects gustatifs. La maitrise des propriétés organoleptiques inclut également leur préservation et leur stabilisation. En l'occurrence, les processus de vieillissement ou de maturation peuvent être raccourcis, allongés, ou modifiés de sorte à correspondre à des propriétés organoleptiques déterminées.

Le terme « organoleptique » désigne ici l'ensemble des aspects relatifs à la sensation éprouvée par le consommateur, qu'il s'agisse de goût, d'odorat, de perception mécanique ou de texture, de perception visuelle, ou d'autres types de perception.

Un objectif particulier de la présente invention est de stabiliser les paramètres physico-chimiques, tels que le pH, la tension de surface, les paramètres rhéologiques, les potentiels redox, la résistivité, la température de saturation ou la turbidité, ou bien de les modifier, ou bien d'en modifier leur évolution dans le temps.

Un autre objectif de la présente invention est de simplifier les procédés de production de tels breuvages, notamment en permettant de s'affranchir d'une ou plusieurs étapes de procédé. Dans un procédé vinicole, les étapes de collage ou de filtrage ou les deux étapes, peuvent être simplifiées ou supprimées. Selon un aspect, le traitement des fluides au moyen de la présente invention peut intervenir à la fin du processus de production, au moment de la mise en stockage pour commercialisation. La mise en stockage inclut la mise en bouteille. Alternativement, une étape de traitement selon la présente invention peut intervenir entre deux étapes déjà connues. Par exemple avant la fermentation, ou pendant la fermentation s'il s'agit de liquides fermenté. Le traitement selon la présente invention peut être opéré avant distillation s'il s'agit d'un fluide distillé.

Selon un mode de réalisation particulier, le procédé de traitement selon la présente invention est continu et peut être inclus à une conduite pré-existante permettant le transit du fluide à traiter depuis un endroit vers un autre endroit, par exemple depuis une cuve de décantation vers une cuve de fermentation ou depuis une cuve de maturation vers un réservoir de stockage. De manière avantageuse, le procédé de traitement n'impacte pas la durée du procédé de production du fluide, en particulier, il ne le rallonge pas, du fait de son intégration dans les dispositifs déjà existants et de son fonctionnement continu. De manière plus avantageuse, le procédé de traitement selon la présente invention permet de diminuer le temps de production du fluide avant sa commercialisation.

Pour ce faire un dispositif de traitement de fluides est présenté. Le dispositif de traitement de fluide comprend un élément de brassage de longueur et au moins un dispositif magnétique, caractérisé en ce que l'élément de brassage comporte plusieurs cannelures sur la paroi interne de sa partie centrale sur une longueur, les cannelures étant orientées de manière non linéaire avec l'axe longitudinal de l'élément de brassage, disposées le long de l'élément de brassage de manière disruptive, décalées les unes par rapport aux autres de façon à diviser le flux de fluide à traiter lors de son passage d'une cannelure à la suivante, et que le au moins un dispositif magnétique est disposé autour de l'élément de brassage à des endroits ne comportant pas de cannelures.

Selon une disposition particulière, le, ou les, dispositifs magnétiques sont polarisés de manière à ce que les lignes de champ Sud-Nord soient orthogonales à la direction d'écoulement des fluides à traiter. A cet effet, le dispositif magnétique peut être circulaire, disposé autour de l'élément de brassage et conçu de sorte que sa polarité Sud-Nord soit radiale, c'est-à-dire orientée depuis le centre du dispositif magnétique circulaire vers sa périphérie ou au contraire depuis sa périphérie vers son centre. Alternativement, le ou les dispositifs magnétiques sont polarisés de manière à ce que les lignes de champ magnétique Sud-Nord soient parallèles au sens d'écoulement des fluides à traiter.

Selon une disposition préférée, les cannelures de l'élément de brassage sont appariées deux à deux de manière à ce que les orientations des cannelures d'une même paire soient inversées l'une par rapport à l'autre. Plusieurs jeux de cannelures sont disposés le long de l'élément de brassage. Les jeux de cannelures sont de préférence décalés les uns par rapports aux autres de manière à diviser le flux du fluide à traiter.

Selon un arrangement particulier, la largeur maximale des cannelures est égale ou inférieure à la moitié du diamètre de l'élément de brassage. Les cannelures peuvent être par exemple de forme hélicoïdale, bien que d'autres formes puissent être envisagées.

Les aimants permanents entourant le tube de brassage peuvent être protégés par un blindage magnétique, par une couche protectrice en polymère, ou par une superposition d'un blindage magnétique et d'une couche protectrice en polymère. Le dispositif peut en outre comporter une enceinte dont la longueur est inférieure ou égale, ou supérieure à celle de l'élément de brassage.

Le dispositif de traitement de fluides peut en outre comprendre un ou plusieurs dispositifs d'irradiation lumineuse, en particulier dans le domaine ultraviolet. De tels dispositifs d'irradiation lumineuse sont avantageusement disposés autour du tube de brassage, notamment aux endroits où le tube de brassage comporte des cannelures. Le dispositif d'irradiation lumineuse peut faire partie d'un module d'irradiation pouvant être intégré ou rajouté au dispositif de traitement.

La présente invention couvre également un procédé de traitement d'un fluide. Le fluide est alimenté dans l'élément de brassage, où il traverse un premier champ magnétique, puis une succession de cannelures, ou de jeux de cannelures qui induisent des perturbations dans l'écoulement du fluide. Le fluide traverse ensuite un second champ magnétique avant de pouvoir être recueilli. Les perturbations apportées par les cannelures dans l'écoulement du fluide sont de type vortex.

De préférence, les premier et second champs magnétiques sont de polarité inversée l'un par rapport à l'autre.

### Brève description des figures

Des exemples de mise en œuvre de l'invention sont indiqués dans la description illustrée par les figures annexées dans lesquelles :
- Figure 1 : Vue schématique du dispositif de traitement selon l'invention

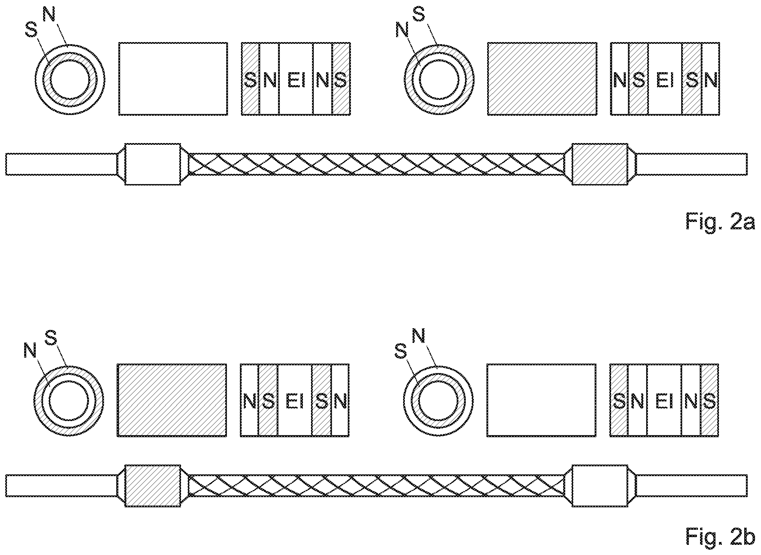

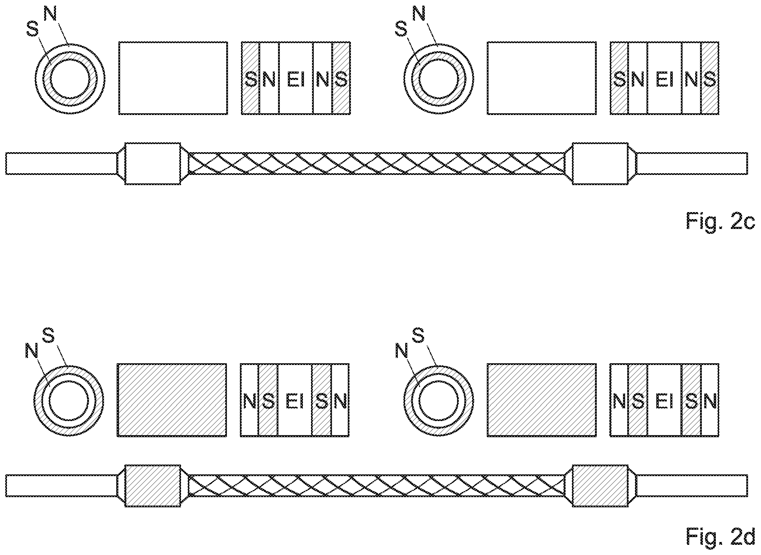

- Figures 2a, 2b, 2c, 2d : vues schématiques de plusieurs configurations des dispositifs magnétiques selon la présente invention.
- Figures 3a, 3b, 3c : Vues schématique d'un mode de réalisation selon la présente invention.

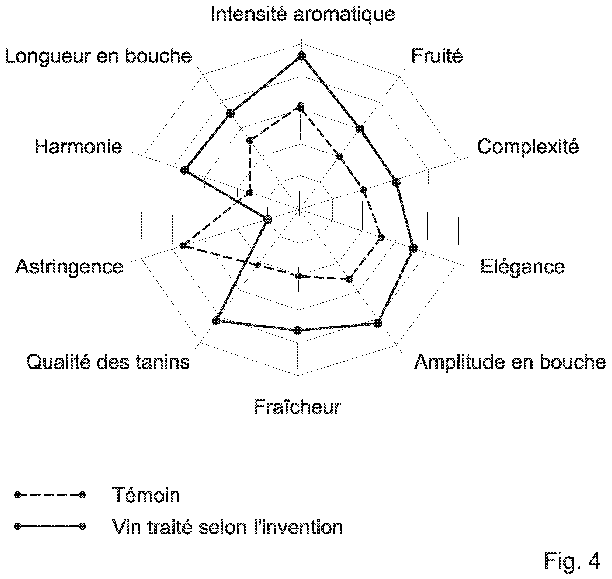

- Figure 4 : exemple de profil gustatif d'un vin traité selon l'invention et d'un vin non traité.
- Figures 5a, 5b, 5c : Exemples de géométries de cannelures
- Figure 5d : Exemple de cannelures moulées dans l'élément de brassage
- Figure 6: Vue schématique d'un élément de brassage pourvu de cannelures et d'un dispositif d'irradiation UV
- Figure 7 : Exemple de géométrie de tube de brassage

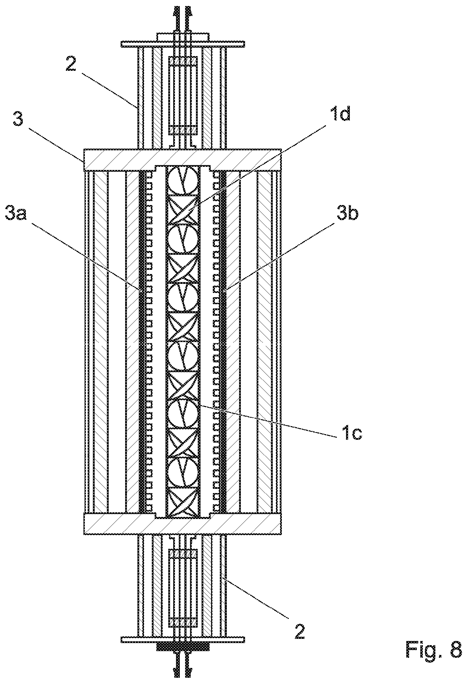

- Figure 8 : Vue schématique d'un dispositif de traitement comprenant à la fois un module d'irradiation UV et des dispositifs magnétiques

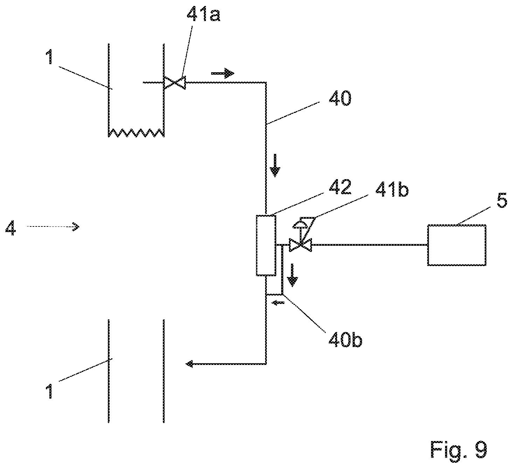

- Figure 9: Vue schématique relative à l'emplacement d'un module d'analyse en ligne

### Exemple(s) de mode de réalisation de l'invention

Le dispositif **D** de la présente invention comporte un élément de brassage **1** permettant de diviser et d'homogénéiser les fluides. L'élément de brassage **1** est adapté pour le brassage d'un fluide **F** selon un procédé continu, c'est-à-dire pouvant être alimenté de manière permanente et sans interruption. Un tel procédé est souvent plus simple et économique que des procédés par batch. L'élément de brassage **1** selon la présente invention comporte donc une alimentation **A,** par laquelle le fluide à traiter **F** est introduit dans l'élément de brassage **1,** et une sortie **S,** par laquelle le fluide traité **F'** est recueilli. Le flux de fluide à traiter **F** est continu et le débit peut être régulé en amont, notamment au moyen d'une pompe **P.**

L'élément de brassage **1** comprend de préférence un tube cylindrique **1c,** dont une extrémité constitue, ou est pourvue, d'un système d'alimentation **A** du fluide à traiter **F** et dont l'autre extrémité constitue, ou est pourvue, d'un système de collecte du liquide traité **F'.** L'alimentation **A** peut alternativement ou en plus comprendre un diaphragme **1a,** permettant de réguler le débit de fluide à traiter **F** à l'entrée de l'élément de brassage **1.** La collecte du fluide traité **F'** à l'extrémité **S** de l'élément de brassage **1** peut s'effectuer directement ou bien par l'intermédiaire d'un réservoir **R.** L'une ou l'autre, ou les deux, des alimentations **A** et sortie **S** peuvent comporter une bride de raccordement **1b.** Le cas échéant, le diaphragme **1a** peut être inclus dans la bride de raccordement **1b.** La ou les brides de raccordement **1b** permettent de connecter l'élément de brassage **1** avec tout type de conduit tel que flexible ou conduite métallique.

La vitesse du fluide à traiter **F** au sein de l'élément de brassage **1** est de préférence comprise entre 0.5 et 3 m/s. La vitesse du fluide à traiter **F** peut être avantageusement comprise entre 1 et 1,5 m/s.

Le débit du fluide à traiter **F** est régulé par le diaphragme **1a.** Alternativement, le débit peut être régulé directement par la pompe d'alimentation **P.** Le débit du fluide à traiter **F** peut être adapté aux dimensions de l'élément de brassage **1,** en particulier à son diamètre **d,** sa longueur L, et d'autres paramètres le caractérisant.

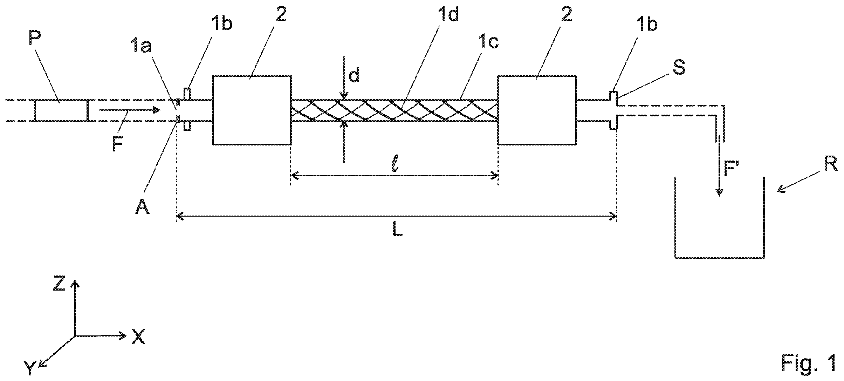

La paroi interne de l'élément de brassage **1** est pourvue de cannelures **1d** orientées de manière non linéaire avec l'axe longitudinal de l'élément de brassage **1.** Les cannelures **1d** sont de préférence orientées selon un angle compris entre 30 et 50 degrés par rapport à l'axe longitudinal de l'élément de brassage **1.** L'axe longitudinal de l'élément de brassage **1** s'oriente dans la direction **x** sur la figure 1, et correspond à la direction générale d'écoulement du fluide à traiter **F** depuis l'alimentation **A** jusqu'à la sortie **S** de l'élément de brassage **1.** Les cannelures **1d** sont de préférence orientées selon un angle de l'ordre de 45 degrés par rapport l'axe longitudinal de l'élément de brassage **1.** Une cannelure **1d** peut par exemple prendre la forme d'une entretoise fixée sur la paroi intérieure de l'élément de brassage **1,** de forme droite ou courbe, et de largeur variable. La largeur d'une cannelure **1d** peut par exemple correspondre à la moitié, ou bien être inférieure à la moitié, du diamètre **d** de l'élément de brassage **1.** La longueur d'une cannelure **1d** est variable mais significativement inférieure à la longueur de l'élément de brassage **1,** de manière à pouvoir disposer plusieurs cannelures **1d** les unes à la suite des autres le long de l'élément de brassage **1.** Les cannelures **1d** sont disposées le long de l'élément de brassage **1** de manière disruptive. Elles sont décalées les unes par rapport aux autres de façon à diviser le flux de fluide à traiter F lors de son passage d'une cannelure **1d** à la suivante. Les cannelures **1d** peuvent par exemple être disposées en quinconce ou bien être décalées d'un angle de 20, 30, 40 ou 50 degrés les unes par rapport aux autres.

De préférence les cannelures **1d** sont disposées par paires sur la paroi interne de l'élément de brassage **1,** de sorte à être en vis-à-vis. Les cannelures **1d** d'une paire peuvent alors être placées de manière symétrique ou inversée, ou bien simplement décalées d'un certain angle l'une par rapport é l'autre.

Selon un arrangement particulier, les paires de cannelures **1d** sont disposées de manière inversée, c'est-à-dire que l'orientation des cannelures **1d** en vis-à-vis est inversée. La largeur des cannelures **1d** peut correspondre à la moitié du diamètre **d** de l'élément de brassage **1** de telle manière qu'elles se rejoignent au centre de l'élément de brassage **1.** Si elles sont de largeur inférieure à la moitié du diamètre **d,** alors une partie du fluide **F** à traiter peut transiter au centre de l'élément de brassage **1** sans entrer en contact avec les cannelures **1d.**

De préférence, l'élément de brassage comporte plusieurs paires de cannelures **1d** disposées en vis-à-vis. Par exemple, l'élément de brassage **1** peut comporter 3, 5, 7, 10, 15, ou plus de vingt paires de cannelures **1d** en fonction des besoins du traitement.

Selon une variante de la présente invention les cannelures **1d** peuvent ne pas avoir toutes la même largeur le long de l'élément de brassage **1.**

Selon une autre variante, les cannelures **1d** sont toutes identiques.

Selon une autre variante, les cannelures **1d** peuvent avoir une largeur non constante, c'est-à-dire par exemple qu'elles peuvent être effilées à une ou deux de leurs extrémités et renflées en leur partie centrale. Alternativement, elles peuvent être de forme triangulaire, c'est-à-dire comporter une extrémité plus large que l'autre. D'autres formes peuvent être considérées.

Selon une autre variante de la présente invention, les cannelures **1d** peuvent être assorties par 3 ou 4 et non seulement par paires.

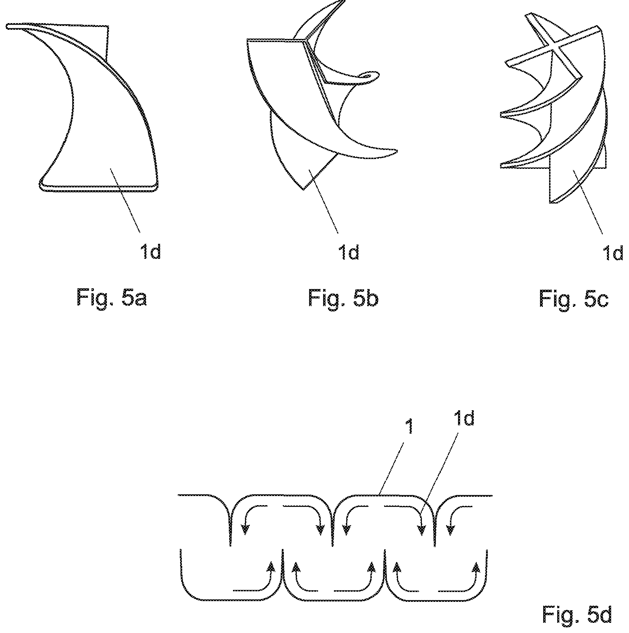

Selon une autre variante de la présente invention, les cannelures **1d** sont hélicoïdales. Les figures 5a, 5b et 5c montrent des exemples de telles cannelures 1d, qui peuvent par exemple comprendre 2 canaux hélicoïdaux (figure 5a) ou bien trois canaux hélicoïdaux (figure 5b) ou encore 4 canaux hélicoïdaux (figure 5c).

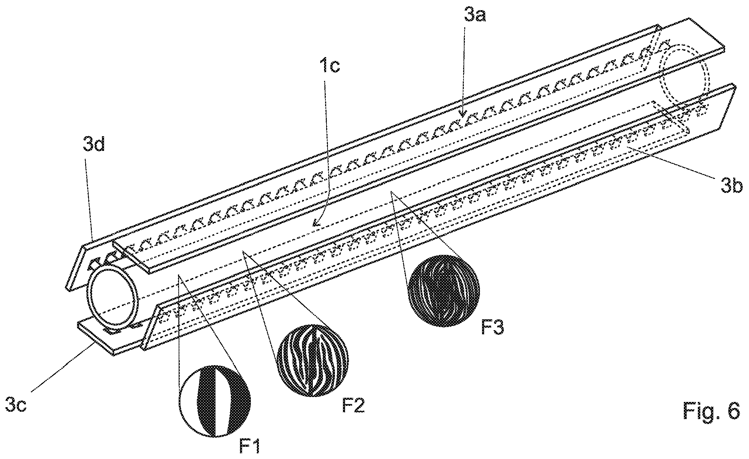

La géométrie, le nombre, la disposition et les dimensions des cannelures **1d** peuvent être déterminées de sorte à diviser le flux **F** de liquide à traiter en films d'écoulement de plus en plus minces et dissociés. La géométrie, le nombre, la disposition et les dimensions des cannelures **1d** peuvent en outre ou alternativement être déterminées de sorte à favoriser les vortex dans l'écoulement **F** du liquide à traiter. Les parts d'écoulement lamellaire et des turbulences dans le flux **F** du liquide, peuvent être optimisées grâce aux paramètres des cannelures **1d.** La figure 6 schématise les divisions **F1, F2, F3** des flux de liquide traversant les cannelures **1d** successives.

Selon une variante, les jeux de cannelures sont contigus les uns aux autres suivant la longueur de l'élément de brassage **1.**

Selon une autre disposition, les jeux de cannelures **1d** sont espacés les uns par rapport aux autres le long de l'élément de brassage **1.**

Selon une disposition particulière les jeux de cannelures **1d** sont regroupés en plusieurs groupes séparés le long de l'élément de brassage **1.**

L'élément de brassage **1** peut être un cylindre métallique **1c,** notamment en inox, ou en inox austénitique. Les cannelures **1d** sont également en inox, ou inox austénitique. L'élément de brassage **1** et les cannelures **1d** sont de préférence constitués d'un matériau non magnétisable.

Alternativement, l'élément de brassage **1** peut être un cylindre transparent à la lumière, en particulier à la lumière ultraviolette. Un tel cylindre transparent peut être par exemple composé de quartz, permettant la transmission des longueurs d'ondes comprises entre 100 nm et 400 nm, en particulier entre 100 nm et 300 nm. Les cannelures **1d** peuvent alors être métalliques, constituées d'un métal non magnétisable ou en matériau non métallique tel que le verre ou le quartz. Alternativement, les cannelures **1d** peuvent être directement formées dans la paroi de l'élément de brassage **1** en quartz, comme représenté par exemple à la figure **5d****.** Dans le cas où l'élément de brasage est transparent, sa surface extérieure peut être recouverte d'un film réfléchissant les longueurs d'ondes adéquates, en particulier les UV utilisés pour traiter les liquides. Un tel film réfléchissant peut être ajouré aux endroits où la lumière est émise, de sorte à lui permettre d'atteindre les liquides transitant à travers l'élément de brassage **1.** Les ajourements peuvent être de simples fenêtres ou bien une ouverture linéaire s'étendant sur une longueur substantielle de l'élément de brassage **1,** correspondant par exemple à la longueur d'une rampe de LED UV disposée le long de l'élément de brassage **1.** Le film réfléchissant ainsi disposé permet de concentrer les rayonnements UV vers le fluide en transit dans l'élément de brassage 1 et d'en améliorer son efficacité. Alternativement, le film réfléchissant peut être disposé sur une paroi interne du module d'irradiation, de sorte à concentrer les irradiations lumineuses vers le liquide. Un tel film peut être constitué ou comprendre des polymères réfléchissant les longueurs d'ondes utilisées, tel que le téflon ou PTFE. D'autres polymères équivalents peuvent être sélectionnés, soit en combinaison soit en remplacement du PTFE.

De sorte à augmenter encore l'efficacité de l'irradiation, les cannelures **1d** peuvent être recouvertes d'un film réfléchissant, soit identique au téflon, soit de nature différente, permettant ainsi d'irradier les couches de liquide les plus profondes dans le flot de circulation du liquide traité. Les cannelures **1d** peuvent alternativement être totalement constituées d'un polymère réfléchissant.

Selon une disposition privilégiée, les cannelures **1d** sont disposées sur une partie centrale de longueur I, de l'élément de brassage **1,** par exemple sur les deux tiers, ou les trois quarts, de sa longueur totale L. Selon une telle disposition les parties terminales de l'élément de brassage **1** sont libres de toutes cannelures **1d.**

Le dispositif selon la présente invention comporte au moins un dispositif magnétique **2,** de préférence 2 dispositifs magnétiques **2.** Les dispositifs magnétiques **2** comportent chacun au moins un aimant permanent **2a,** comportant un pôle nord **n** et un pôle sud **s.** Un aimant permanent **2a** peut être circulaire et entourer l'élément de brassage **1.** Il peut alternativement se présenter sous la forme de deux hémisphères ou de plusieurs arcs de segments disposés autour de l'élément de brassage **1,** ou bien se présenter sous la forme d'un parallélépipède disposé le long de l'élément de brassage **1.** Un dispositif magnétique **2** peut regrouper plusieurs aimants permanents **2a** quelle que soit leur forme. Dans le cas où les aimants permanents **2a** sont de forme parallélépipédique, leurs pôles sud **s** et nord **n** peuvent être disposés à chacune de leurs extrémités. Alternativement, les pôles sud **s** et nord n peuvent être distribués sur deux longueurs opposées du parallélépipède. Indépendamment de la distribution de leurs pôles sud et nord, les aimants permanents **2a** parallélépipédiques peuvent être agencés parallèlement à l'élément de brassage **1,** c'est-à-dire de sorte que leur longueur soit orientée selon l'axe longitudinal de l'élément de brassage **1,** ou bien perpendiculairement à l'élément de brassage **1.** Plusieurs aimants parallélépipédiques peuvent être ainsi distribués autour de l'élément de brassage **1** et constituer un dispositif magnétique **2.**

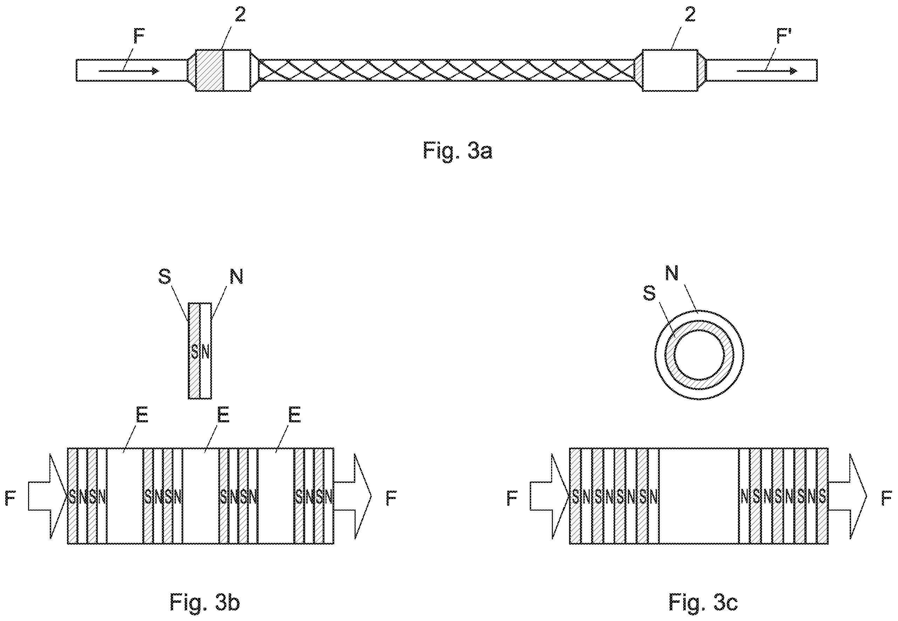

Alternativement, les aimants permanents **2a** peuvent être circulaires, soit sous forme de disque, soit sous forme d'anneaux. Lorsqu'ils sont sous forme d'anneau, leur polarisation sud-nord peut être radiale. Une telle polarisation résulte d'une distribution des pôles sud **s** et nord n de l'aimant permanent **2a** sur les faces interne et externe de l'anneau. Selon une telle configuration, le champ magnétique issu de l'aimant permanent **2a** sera dirigé perpendiculairement à la direction d'écoulement du fluide **F** à traiter dans l'élément de brassage **1.** Plusieurs aimants permanents circulaires dont la polarisation est radiale, peuvent être regroupés au sein d'un dispositif magnétique **2.** La figure 3c schématise un exemple de réalisation de dispositif magnétique **2** comprenant des aimants permanents **2a** dont la polarisation est axiale. Les aimants permanents **2a** peuvent être selon cette configuration séparés par un élément intercalaire métallique **El.** L'élément intercalaire métallique **El** peut être inséré entre deux aimants permanents **2a** contigus, ou bien entre des groupes d'aimants permanents **2a.** Au sein d'un groupe d'aimants permanent **2a** à polarisation radiale, les aimants contigus peuvent être de polarité inversée. Les groupes d'aimants permanents **2a** peuvent comprendre 2 aimants ou plus, tels que 4, 6, 8, ou 10 aimants permanents à polarisation radiale. Selon un mode de réalisation particulier, le dispositif magnétique 2 peut comprendre 2 groupes de 8 aimants permanents **2a** à polarisation radiale, séparés par un élément intermédiaire métallique El.

Une polarisation axiale de l'aimant circulaire **2a** est obtenue lorsque les pôles sud et nord sont distribués sur les surfaces latérales opposées de l'anneau. Selon cet arrangement, le champ magnétique issu des aimants permanents **2a** sera orienté substantiellement parallèlement au sens d'écoulement du fluide **F** dans l'élément de brassage **1.** Plusieurs aimants permanents **2a** circulaires dont la polarisation est axiale peuvent être regroupés au sein d'un dispositif magnétique **2.** Les aimants permanents peuvent être au sein d'un même dispositif magnétique **2,** en contact direct, ou bien séparés par une entretoise **E.** L'entretoise **E** peut être d'épaisseur variable. Elle peut par exemple correspondre à l'épaisseur d'un aimant permanent **2a** ou de deux aimants permanents **2a,** ou de plus de deux aimants permanents. L'entretoise **E** peut être intercalée entre deux aimants permanents **2a** ou bien entre deux groupes d'aimants permanents **2a.** L'entretoise **E** est de préférence en matériau non métallique. L'entretoise E peut être par exemple en matière polymère. Chacun des groupes d'aimants permanents **2a** peuvent contenir 2 ou plus de 2 aimants permanents **2a,** comme par exemple 3 ou 4 ou plus d'aimants permanents **2a.** Un exemple de dispositif magnétique est illustré à la figure 3b. Un dispositif magnétique **2** selon cette disposition comporte quatre paires d'aimants permanents de polarisation axiale et trois entretoises **E,** chaque entretoise **E** étant disposée entre deux paires d'aimants permanents **2a.** Les aimants permanents **2a** sont appariés de manière à ce que le pôle sud de l'un des 2 aimants permanents **2a** soit en vis-à-vis du pôle nord de l'aimant permanent qui lui est apparié.

Un dispositif magnétique **2** selon la présente invention peut regrouper des aimants circulaires **2a** dont les polarisations sont axiales et radiales. Dans le cas où un même dispositif magnétique **2** regroupe plusieurs aimants permanents **2a** de polarisation axiale, l'orientation sud-nord des aimants permanents **2a** peut être identique ou inversée. Dans le cas où un même dispositif magnétique **2** regroupe plusieurs aimants permanents **2a** de polarisation radiale, l'orientation sud-nord des aimants permanents **2a** peut être identique ou inversée.

Les aimants permanents **2a,** au sein d'un même dispositif magnétique **2,** peuvent être accolés ou bien séparés par un élément métallique intercalaire **El.** Un tel élément métallique intercalaire peut notamment être de type ferrique, tel qu'un inox ferrique, et influer le champ magnétique issu des aimants permanents **2a** auxquels il est associé. En particulier, dans le cas d'aimants permanents **2a** circulaires à polarité radiale, l'élément métallique intercalaire **El** peut orienter le champ magnétique autrement que perpendiculairement au sens d'écoulement du fluide **F** dans l'élément de brassage **1.** En l'occurrence, le champ magnétique résultant d'un tel assemblage peut être oblique ou même parallèle au sens d'écoulement du fluide **F** dans l'élément de brassage **1.**

Selon une disposition privilégiée, un dispositif magnétique **2** selon la présente invention comporte un ensemble de plusieurs aimants permanents **2a** circulaires à polarisation radiale, combinés avec au moins un élément métallique intermédiaire **El.** En particulier, un tel dispositif magnétique **2** comporte deux paires d'aimants permanents **2a** circulaires à polarité radiale séparées par un élément métallique intercalaire **El.** De préférence au sein d'une paire d'aimants **2a,** les polarités sud-nord sont inversées. En d'autres termes, le pôle sud de l'un des aimants permanents **2a** est disposé sur la face interne de l'anneau alors que le pôle sud de l'aimant permanent **2a** contigu est disposé sur la face externe de l'anneau. Les paires d'aimants permanents **2a** sont de préférence disposées de manière symétrique de part et d'autre de l'élément métallique intercalaire **El.** Selon un tel arrangement symétrique, les aimants permanents circulaires situés aux deux extrémités du dispositif magnétique **2** sont tous les deux polarisés de manière identique, leur pôle sud étant disposé sur la face interne de l'anneau ou au contraire sur leur face externe.

Selon une disposition particulière, les deux dispositifs magnétiques **2** peuvent être identiques l'un à l'autre, en ce sens que la disposition des aimants permanents **2a** est la même dans chacun des deux dispositifs magnétiques **2.** Selon une autre disposition, privilégiée dans le cadre de la présente invention, les deux dispositifs magnétiques **2** sont inversés en ce sens que la disposition des aimants permanents **2a** est inversée d'un dispositif magnétique **2** à l'autre.

Selon une configuration privilégiée le dispositif de traitement D comprend 2 dispositifs magnétiques **2** disposés chacun à une extrémité de l'élément de brassage **1.** Ils sont avantageusement disposés autour d'une portion de l'élément de brassage **1** dépourvue de cannelures **1d.** De cette manière, le fluide à traiter **F,** lorsqu'il transite dans l'élément de brassage **1,** passe à travers un champ magnétique avant de traverser la section de l'élément de brassage **1** pourvue de cannelures **1d.** Il traverse ensuite un second champ magnétique après avoir traversé la section de l'élément de brassage **1** pourvue de cannelures **1d,** juste avant d'être recueilli à la sortie **S** de l'élément de brassage **1.**

La distance I correspondant à la section de l'élément de brassage **1** garnie de cannelures **1d** peut varier en fonction de la puissance des champs magnétiques générés. Par exemple la longueur **l** peut être déterminée de manière à ce que les champs magnétiques générés par les dispositifs magnétiques **2** n'interagissent pas. Alternativement, la longueur **I** peut être suffisamment courte pour que les champs magnétiques générés par les dispositifs magnétiques **2** interagissent. D'une façon plus général le degré d'interaction entre les champs magnétique dépend de la longueur **I**. L'interaction des champs magnétiques peut être en l'occurrence l'attraction ou la répulsion en fonction de la disposition des amants permanents **2a** au sein des dispositifs magnétiques **2.**

Selon une disposition privilégiée de l'invention, la longueur **I** est déterminée de manière à permettre l'interaction des champs magnétiques générés par les dispositifs magnétiques **2.** De manière avantageuse l'interaction magnétique est de type répulsion.

Les amants permanents **2a** peuvent être de différente nature en fonction des propriétés attendues. Par exemple, des aimants résistants à des températures élevées peuvent être recommandés pour permettre les lavages du dispositif à haute température telle que 80 degrés Celsius ou 100 degrés Celsius ou des lavages à la vapeur à des températures supérieures à 100 degrés Celsius. Des amants de type ferrique peuvent être avantageusement utilisés, pouvant comprendre d'autres éléments que le fer, tels que le cuivre, l'aluminium ou le nickel. Alternativement des aimants à base de samarium ou de cadmium peuvent être employés. Selon les besoins particuliers de la présente invention, des aimants permanents **2a** à base de néodyme peuvent être choisis. Des aimants comprenant du cobalt, du bore, ou d'autres éléments sont alternativement envisagés.

Les dispositifs magnétiques **2** peuvent inclure des aimants permanents **2a** de type différents ou bien de même type.

De manière optionnelle, un ou plusieurs dispositifs magnétiques **2** supplémentaire peuvent être disposés autour d'une portion de l'élément de brassage **1** garnie de cannelures **1d.** De cette manière, le fluide à traiter **F** est également soumis à l'effet concomitant des cannelures **1d** et d'un champ magnétique. Le ou les dispositifs magnétiques **2a** supplémentaires peuvent être identiques ou différents des dispositifs magnétiques terminaux. Ils peuvent notamment se composer d'aimants permanents **2a** de forme parallélépipédique.

Selon une configuration privilégiée le dispositif de traitement **D** comprend 2 dispositifs magnétiques **2** disposés chacun à une extrémité de l'élément de brassage **1,** autour d'une portion de l'élément de brassage **1** dépourvue de cannelures **1d.** Le premier dispositif magnétique **2,** disposé avant la portion de l'élément de brassage **1** munie de cannelures 1d, comprend un ensemble d'aimants permanents **2a** de polarisation axiale, et le second dispositif magnétique **2,** disposé après la portion de l'élément de brassage 1 munie de cannelures **1d,** comprend un ensemble d'aimants permanents 2a de polarisation radiale. De préférence l'arrangement est celui décrit par les figures 3a, 3b et 3c. Le premier dispositif magnétique **2** comprend 4 groupes d'aimants permanent **2a** de polarisation axiale, les groupes d'aimants permanents **2a** étant séparés par des entretoises **E.** Le second dispositif magnétique **2** comprend deux groupes d'aimants permanents **2a** de polarisation radiale, séparés par un élément intercalaire métallique **El.**

Selon un arrangement particulier, l'élément de brassage **1** peut comprendre plus d'une section garnie de cannelures **1d,** pouvant être séparées ou non par un dispositif magnétique **2a.**

Les dispositifs magnétiques **2** peuvent être entourés d'un blindage magnétique, tel qu'une couche en acier ferrique **2b.** Selon une disposition particulière, la couche de blindage magnétique s'étend sur toute la longueur de l'élément de brassage **1.** Selon une disposition alternative, seuls les dispositifs magnétiques **2** sont recouverts d'une couche de blindage magnétique **2b.**

Les dispositifs magnétiques **2** et leur blindage magnétique **2b** sont avantageusement recouverts d'une couche de protection en polymère, tel qu'une matière plastique **2c.**

Selon un aspect de la présente invention, l'ensemble constitué de l'élément de brassage **1** et des dispositifs magnétiques **2,** accompagnés de leurs couches de protection **2c** et de blindage magnétique **2b,** est encapsulé totalement ou partiellement dans une enceinte en acier inox austénitique **3.** Une telle enceinte peut se présenter par exemple sous la forme d'un tube **3a** englobant les dispositifs magnétiques **2** sur une longueur égale ou inférieure à la longueur de l'élément de brassage **1.** Les extrémités du tube **3a** constituant l'enceinte **3** peuvent être fermées à l'aide de manchons en inox austénitiques **3b.**

L'enceinte peut ensuite être isolée dans un gel-mousse adapté aux dispositifs magnétiques.

Selon une disposition avantageuse, l'élément de brassage **1** peut être entouré, sur toute sa longueur ou sur une portion seulement, d'un système de chauffage ou d'un système réfrigérant, non représenté. Une ou plusieurs conduites d'alimentation peuvent être prévues pour permettre l'alimentation d'autres fluides au sein de l'élément de brassage **1,** soit de manière séquentielle, soit en concomitance pour effectuer des mélanges. Les autres fluides admis peuvent être des liquides ou bien des gaz. Une ou plusieurs conduites de purge peuvent en outre être prévues le long de l'élément de brassage **1,** notamment pour permettre un dégazage total ou partiel des fluides traités.

De manière avantageuse, la pression d'alimentation des fluides à traiter peut être régulée en amont de l'alimentation. Le brassage peut alors s'effectuer à pression atmosphérique ou à une pression supérieure à la pression atmosphérique telle que 2, 3, 10 ou 50 bars. Alternativement, une pompe à vide peut être incluse de manière à créer une dépression dans l'élément de brassage **1.**

Le dispositif de traitement **D** selon la présente invention peut en outre comporter un module d'irradiation UV **3** illustré à la figure 6, permettant d'éliminer ou de réduire les microorganismes présents dans le liquide à traiter. De tels microorganismes peuvent être pathogènes et présenter un risque d'intoxication pour le consommateur. En outre certains microorganismes contribuent à modifier le liquide, notamment lors d'un stockage prolongé. Des sulfites ou d'autres produits conservateurs sont souvent utilisés comme germicides, avec cependant des effets potentiellement néfastes pour le consommateur. Le module d'irradiation UV **3** permet de limiter ou d'éliminer totalement l'utilisation d'additifs germicides dans le liquide à traiter, en particulier les sulfites. Le liquide peut alors être traité selon des normes biologiques ou naturelles. Le module d'irradiation UV **3,** comprend en particulier au moins une source d'irradiation UV 3a, 3b, 3c, 3d, orientée vers le liquide à traiter. Le module d'irradiation UV **3** permet ainsi le traitement du liquide selon un mode continu lors de son écoulement à travers l'élément de brassage **1.** La paroi de l'élément de brassage **1** est dans ce cas transparente aux UV de sorte à pouvoir irradier le liquide durant son transit dans l'élément de brassage **1.** Elle peut être en l'occurrence faite en quartz, avec une épaisseur comprise entre environ 2 mm et 50 mm selon le diamètre **d** de l'élément de brassage **1,** la pression du liquide qui y transite, et d'éventuels autres paramètres. La ou les sources d'irradiation UV **3a, 3b, 3c, 3d** peuvent prendre la forme de LED ou groupes de LED disposés le long de l'élément de brassage **1** et à l'extérieur de celui-ci. Les UV émis par de tels sources d'irradiation UV sont de préférence des UV de type C, dont les longueurs d'ondes sont comprises entre 100 nm et 280 nm. D'autres longueurs d'ondes ou un mélange de plusieurs longueurs d'ondes peuvent néanmoins être émises. Les sources d'irradiation UV **3a, 3b, 3c, 3d** peuvent être disposées de manière continue le long de l'élément de brassage **1,** de préférence en regard des parties cannelée. En effet, les cannelures **1d,** en permettant la division des flux de liquide et leur brassage, augmentent leur exposition aux irradiations lumineuses et par conséquent l'efficacité de l'effet germicide de telles irradiations. De surcroît, des liquides opaques tels que le vin rouge, ou même le lait, peuvent aisément être traités dans leur masse grâce aux cannelures **1d** de l'élément de brassage **1.** La division des flux de liquides permet ainsi de limiter la taille du dispositif de traitement et la durée d'exposition du liquide aux UV. L'effet conjugué des cannelures **1d** et de l'irradiation UV présente une synergie avantageuse dans le traitement des liquides. Un film réfléchissant tel que décrit plus haut peut équiper le module d'irradiation UV **3** et/ou l'élément de brassage **1.**

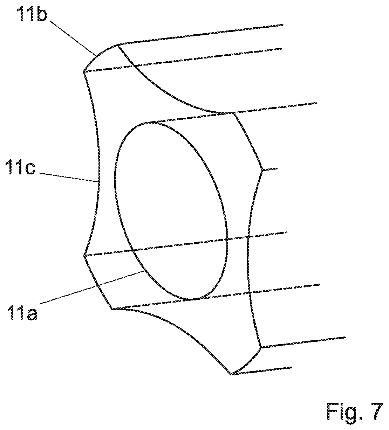

L'élément de brassage **1** comporte une surface interne **11a** et une surface externe **11b,** qui peuvent être l'une et l'autre totalement cylindriques et concentriques. Alternativement, l'une ou l'autre des surfaces interne **11a** et externe **11b,** ou bien les deux, peuvent comporter un ou plusieurs évidements **11c** (figure 7). De tels évidements peuvent être longitudinaux et s'étendre sur toute la longueur de l'élément de brassage **1** ou seulement une partie de sa longueur. Alternativement ou en plus, des évidements **11c** de forme circulaire ou elliptiques peuvent être ménagés de part en part sur les surfaces de l'élément de brassage **1.** De tels évidements **11c** présentent la particularité de former des courbures concaves sur les parois de l'élément de brassage **1,** ayant pour effet de concentrer les rayonnements UV vers l'intérieur de l'élément de brassage **1,** ou tout du moins de limiter leur réflexion vers l'extérieur.

Le module d'irradiation UV **3** peut être utilisé pour la photolyse de composés indésirables dans le breuvage. La thuyone peut par exemple être dégradée pour en maintenir les proportions en dessous des seuils réglementaires ou pour la dégrader complétement.

Le module d'irradiation UV **3** peut avantageusement être disposé entre **2** dispositifs magnétiques **2.** Lorsque plus de deux dispositifs magnétiques **2** sont disposés le long de l'élément de brassage **1,** plusieurs modules d'irradiation UV **3** peuvent être insérés. De sorte à limiter l'encombrement du dispositif de traitement **D,** le ou les modules d'irradiation UV **3** peuvent être intégrés dans le blindage magnétique ou inclus dans son enceinte.

Il est dès lors possible de mettre en synergie le brassage par les cannelures du liquide à traiter, à la fois avec le champ magnétique et l'irradiation UV. De cette manière, les effets de l'irradiation UV sont maximisés et l'encombrement du dispositif de traitement reste compact. Il est notable que plusieurs étapes du traitement sont effectuées de façon concomitante. En particulier les étapes de traitement des propriétés organoleptiques et germicides sont effectuées de manière concomitante.

Le dispositif de traitement **D** peut en outre comprendre un module d'analyse **4** en ligne permettant de suivre en temps réel plusieurs paramètres. Un ou plusieurs des paramètres physicochimiques sélectionnés parmi le pH, le potentiel redox, la conductivité, la quantité d'oxygène et/ou de CO₂ dissout et la turbidité peuvent faire l'objet d'un suivi, continu ou par batch. Une analyse des microorganismes présents dans le liquide traité est également possible, soit en plus soit en remplacement de l'analyse physico-chimique, selon les besoins. De préférence l'analyse est effectuée en continu. Une conduite de dérivation **40** peut être connectée à l'élément de brassage **1** ou en sortie de l'élément de brassage **1** pour conduire une portion du liquide traité dans un dispositif d'analyse **5.** La conduite de dérivation **40** peut être pourvue d'un filtre **42** et éventuellement d'une boucle de dérivation **40b** permettant de faire transiter le liquide à analyser soit à travers, soit en dehors du filtre **42.** Une ou plusieurs vannes **41a, 41b** peuvent être incluses dans le module d'analyse **4** pour fermer ou ouvrir les conduites. Le liquide à analyser est acheminé vers le dispositif d'analyse **5** pour en déterminer un ou plusieurs des paramètres physico-chimique ou biologiques.

Le dispositif d'analyse **5** peut être un appareil de cytométrie en flux (CMF) ou tout autre dispositif d'analyse utile à la détermination de paramètres en ligne, de même qu'une combinaison de dispositifs de mesure.

Le dispositif de traitement **D** peut alors être utilisé à des fins de recherche, de développement ou d'optimisation du procédé. Il peut en plus permettre des contrôles qualité fréquents dans le cadre d'une production.

Le dispositif de traitement **D** peut être facilement adapté à des systèmes déjà en place. Il peut être par exemple adapté à un filtre tangentiel ou à d'autres équipements existants. Il offre en outre la possibilité d'une modification modulaire des systèmes déjà existants. En l'occurrence, le dispositif de traitement **D** peut se présenter sous la forme d'un arrangement de base comprenant l'élément de brassage **1** et au moins un dispositif magnétique **2.** Il peut en outre comprendre l'un ou l'autre des modules d'irradiation UV **3** et d'analyse **4,** ou une combinaison des deux.

La présente invention couvre également un procédé de traitement d'un fluide F avec le dispositif décrit ci-dessus, le dit procédé comprenant les étapes de :
a) alimenter un élément de brassage 1 en fluide à traiter **F,**
   - b) Faire transiter le fluide à traiter **F** à travers un premier champ magnétique,
   - c) Faire transiter le fluide **F** à travers plusieurs jeux de cannelures **1d** de manière à le brasser physiquement,
   - d) Faire transiter le fluide à traiter **F** à travers un second champ magnétique,
   - e) Recueillir le fluide traité **F'.**

L'étape a) peut s'effectuer à l'aide d'une pompe **P.** L'alimentation du fluide peut être effectuée à pression ambiante ou bien à une pression différente. La température du fluide à traiter peut en plus ou alternativement être conditionnée en amont de l'alimentation. Le champ magnétique traversé lors de l'étape b) est généré par un dispositif magnétique **2** selon l'invention décrite plus haut. Les étapes b) et c) sont de préférence successives. Elles peuvent néanmoins être concomitantes. Les termes « traverser un champ magnétique » ou « faire transiter le fluide à travers un champ magnétique » désigne essentiellement le passage du fluide à travers un dispositif magnétique **2,** tel que décrit plus haut.

Les étapes b) et c) peuvent éventuellement être répétées plusieurs fois, soit par l'utilisation d'un dispositif en boucle ouverte, soit au moyen de plusieurs section garnies de cannelures séparées par plusieurs dispositifs magnétiques **2.**

Le procédé de traitement selon la présente invention peut être pratiqué sur la totalité d'une cuve ou seulement sur une partie de cette cuve. La cuve de stockage peut à cet effet être pourvue de deux sorties, dont l'une seulement est raccordée au dispositif de traitement **D** de la présente invention.

Le fluide à traiter **F** est avantageusement un vin ou un autre alcool fermenté, tel que la bière, ou un alcool distillé.

Le procédé selon la présente invention peut eu outre comprendre l'étape c') d'irradier le fluide **F** par une lumière ultraviolette lors de son transit à travers les jeux de cannelures **1d.** L'étape c') peut notamment être effectuée au moyen d'une ou plusieurs sources d'irradiation UV disposées à l'extérieur de l'élément de brassage entre deux dispositifs magnétiques **2.**

### Numéros de référence employés sur les figures

- 1: Élément de brassage
- 1a: Diaphragme
- 1b: Bride de raccordement
- 1c: Tube de l'élément de brassage 1
- 1d: Cannelures
- 11a, 11b: Surfaces interne et externe de l'élément de brassage
- 11c: Evidements
- 2: Dispositif magnétique
- 2a: Aimant permanent
- 2b: Blindage magnétique
- 2c: Couche de protection en polymère
- 3: Module d'irradiation UV
- 3a, 3b, 3c, 3d: Sources d'émissions UV
- 4: Module d'analyse
- 40: Conduite de dérivation
- 41a, 41b: Vannes
- 42: Filtre
- 5: Dispositif d'analyse
- A: Alimentation
- D: Dispositif de traitement
- d: Diamètre de l'élément de brassage
- El: Elément métallique intercalaire
- E: Entretoise
- F: Fluide à traiter
- F': Fluide traité
- I: Longueur pourvue de cannelures
- L: Longueur de l'élément de brassage 1
- P: Pompe
- R: Réservoir
- S: Sortie du fluide
- s: Pôle sud
- n: Pôle nord

## Revendications

1. Dispositif (D) de traitement de fluide (F) comprenant un élément de brassage (1) de longueur (L) et au moins un dispositif magnétique (2), **caractérisé en ce que** l'élément de brassage (1) comporte plusieurs cannelures (1d) sur la paroi interne de sa partie centrale sur une longueur (I), les cannelures (1d) étant orientées de manière non linéaire avec l'axe longitudinal de l'élément de brassage, disposées le long de l'élément de brassage de manière disruptive, décalées les unes par rapport aux autres de façon à diviser le flux de fluide à traiter (F) lors de son passage d'une cannelure (1d) à la suivante, et que le au moins un dispositif magnétique (2) est disposé autour de l'élément de brassage (1) à des endroits ne comportant pas de cannelures (1d).

2. Dispositif selon la revendication 1, **caractérisé en ce que** les lignes de champs Sud-Nord générées par les dispositifs magnétiques (2) sont orientées parallèlement à l'axe longitudinal de l'élément de brassage (1).

3. Dispositif selon l'une ou l'autre des revendications 1 et 2, **caractérisé en ce que** le au moins un dispositif magnétique (2) comporte plusieurs aimants permanents (2a) de forme annulaire et de polarité radiale, et au moins un élément métallique intercalaire (El).

4. Dispositif selon l'une ou l'autre des revendications précédentes, **caractérisé en ce qu'**il comprend au moins deux dispositifs magnétiques (2) disposés de part et d'autre de la section de l'élément de brassage (1) garnie de cannelures (1d) et de longueur (l), de telle manière que les champs magnétiques générés par les dispositifs magnétiques (2) interagissent l'un avec l'autre.

5. Dispositif selon l'une ou l'autre des revendications précédentes, **caractérisé en ce que** les cannelures (1d) de l'élément de brassage (1) sont appariées deux à deux de manière à ce que les orientations des cannelures (1d) d'une même paire sont inversées l'une par rapport à l'autre.

6. Dispositif selon l'une ou l'autre des revendications précédentes, **caractérisées en ce que** plusieurs jeux de cannelures (1d) sont disposés le long dudit élément de brassage (1) et décalés les uns par rapports aux autres.

7. Dispositif selon l'une ou l'autre des revendications précédentes **caractérisé en ce que** les cannelures (1d) sont de forme hélicoïdale.

8. Dispositif selon l'une ou l'autre des revendications 1 à 8, **caractérisé en ce que** l'élément de brassage (1) est transparent aux UV et **en ce que** ledit dispositif (D) comprend en outre un module d'irradiation UV (3) disposé à l'extérieur de l'élément de brassage (1).

9. Dispositif selon la revendication 8, **caractérisé en ce que** l'élément de brassage (1) est partiellement recouvert d'un film réfléchissant les UV et/ou **en ce que** les parois du module d'irradiation UV (3) entourant l'élément de brassage (1) sont recouvertes d'un tel film réfléchissant les UV.

10. Dispositif selon l'une des revendications 1 à 9, **caractérisé en ce qu'**il comprend en outre un module d'analyse (4) d'au moins paramètre en ligne au moyen d'un dispositif d'analyse (5), et de conduites de dérivations (40).

11. Dispositif selon l'une des revendications 1 à 10, **caractérisé en ce que** ledit dispositif est intégré à une installation déjà existante.

12. Procédé de traitement d'un fluide F avec le dispositif de l'une des revendications 1-11 comprenant l'étape :
- a) d'alimenter un élément de brassage (1) en fluide à traiter (F),
- b) Faire transiter le fluide à traiter (F) à travers un premier champ magnétique,
- c) Faire transiter le fluide (F) à travers plusieurs jeux de cannelures (1d) de manière à le brasser physiquement,
- d) Faire transiter le fluide à traiter (F) à travers un second champ magnétique,
- e) Recueillir le fluide traité (F').

13. Procédé selon la revendication 12, **caractérisé en ce que** les premier et second champs magnétiques sont de polarité inversée l'un par rapport à l'autre.

14. Procédé selon les revendications 12 ou 13, **caractérisé en ce que** le fluide à traiter est un vin ou un alcool distillé.

15. Procédé selon l'une des revendications 12 à 14, **caractérisé en ce qu'**il comprend une étape c') d'irradiation UV du produit lors de son transit à travers lesdits jeux de cannelures (1d).

## Patentansprüche

1. Vorrichtung (D) zur Behandlung von Flüssigkeiten (F), umfassend ein Rührelement (1) mit einer Länge (L) und mindestens eine Magnetvorrichtung (2), **dadurch gekennzeichnet, dass** das Rührelement (1) an der Innenwand seines Mittelteils über eine Länge (I) mehrere Rillen (1d) aufweist, wobei die Rillen (1d) nicht linear zur Längsachse des Rührelements ausgerichtet sind, entlang des Rührelements auf unterbrochene Weise angeordnet sind und derart zueinander versetzt sind, dass der zu behandelnde Flüssigkeitsstrom (F) beim Übergang von einer Rille (1d) zur nächsten geteilt wird, und dass die mindestens eine Magnetvorrichtung (2) um das Rührelement (1) herum an Stellen angeordnet ist, welche keine Rillen (1d) aufweisen.

2. Vorrichtung gemäss Anspruch 1, **dadurch gekennzeichnet, dass** die von den Magnetvorrichtungen (2) erzeugten Süd-Nord-Feldlinien parallel zur Längsachse des Rührelements (1) ausgerichtet sind.

3. Vorrichtung gemäss dem einen oder anderen der Ansprüche 1 und 2, **dadurch gekennzeichnet, dass** die mindestens eine Magnetvorrichtung (2) mehrere Permanentmagnete (2a) von ringförmiger Gestalt und radialer Polarität sowie mindestens ein metallisches Zwischenelement (El) umfasst.

4. Vorrichtung gemäss dem einen oder anderen der vorhergehenden Ansprüche, **dadurch gekennzeichnet, dass** sie mindestens zwei Magnetvorrichtungen (2) umfasst, welche beidseitig des mit Rillen (1d) versehenen Abschnitts von Länge (I) des Rührelements (1) derart angeordnet sind, dass die von den Magnetvorrichtungen (2) erzeugten Magnetfelder miteinander interagieren.

5. Vorrichtung gemäss dem einen oder anderen der vorhergehenden Ansprüche, **dadurch gekennzeichnet, dass** die Rillen (1d) des Rührelements (1) paarweise derart angeordnet sind, dass die Ausrichtungen der Rillen (1d) desselben Paares zueinander invertiert sind.

6. Vorrichtung gemäss dem einen oder anderen der vorhergehenden Ansprüche, **dadurch gekennzeichnet, dass** mehrere Sätze von Rillen (1d) entlang des besagten Rührelements (1) angeordnet und zueinander versetzt sind.

7. Vorrichtung gemäss dem einen oder anderen der vorhergehenden Ansprüche, **dadurch gekennzeichnet, dass** die Rillen (1d) helixförmig ausgebildet sind.

8. Vorrichtung gemäss dem einen oder anderen der Ansprüche 1 bis 7, **dadurch gekennzeichnet, dass** das Rührelement (1) UV-transparent ist und dass die besagte Vorrichtung (D) ferner ein UV-Bestrahlungsmodul (3) umfasst, welches ausserhalb des Rührelements (1) angeordnet ist.

9. Vorrichtung gemäss Anspruch 8, **dadurch gekennzeichnet, dass** das Rührelement (1) teilweise mit einem UV-reflektierenden Film bedeckt ist, und/oder dass die das Rührelement (1) umgebenden Wände des UV-Bestrahlungsmoduls (3) mit einem solchen UV-reflektierenden Film bedeckt sind.

10. Vorrichtung gemäss einem der Ansprüche 1 bis 9, **dadurch gekennzeichnet, dass** sie ferner ein Analysemodul (4) zur Online-Analyse mindestens eines Parameters mittels einer Analysevorrichtung (5) und Bypass-Leitungen (40) umfasst.

11. Vorrichtung gemäss einem der Ansprüche 1 bis 10, **dadurch gekennzeichnet, dass** die besagte Vorrichtung in eine bereits bestehende Anlage integriert ist.

12. Verfahren zur Behandlung einer Flüssigkeit (F) mit der Vorrichtung eines der Ansprüche 1 bis 11, umfassend die folgenden Schritte:
a) Zuführen einer zu behandelnden Flüssigkeit (F) in ein Rührelement (1),
b) Durchleiten der zu behandelnden Flüssigkeit (F) durch ein erstes Magnetfeld,
c) Durchleiten der Flüssigkeit (F) durch mehrere Sätze von Rillen (1d), um sie physisch zu durchrühren,
d) Durchleiten der zu behandelnden Flüssigkeit (F) durch ein zweites Magnetfeld,
e) Auffangen der behandelten Flüssigkeit (F').

13. Verfahren gemäss Anspruch 12, **dadurch gekennzeichnet, dass** das erste und das zweite Magnetfeld eine zueinander invertierte Polarität aufweisen.

14. Verfahren gemäss Anspruch 12 oder 13, **dadurch gekennzeichnet, dass** die zu behandelnde Flüssigkeit ein Wein oder ein destillierter Alkohol ist.

15. Verfahren gemäss einem der Ansprüche 12 bis 14, **dadurch gekennzeichnet, dass** es einen Schritt c') der UV-Bestrahlung des Produkts während seines Durchgangs durch die Sätze von Rillen (1d) umfasst.

## Claims

1. A device (D) for treating a fluid (F), comprising a mixing element (1) of length (L) and at least one magnetic device (2), **characterised in that** the mixing element (1) comprises a plurality of grooves (1d) on the inner wall of its central portion over a length (I), the grooves (1d) being oriented nonlinearly with respect to the longitudinal axis of the mixing element, arranged along the mixing element in a disruptive manner, and offset relative to one another so as to split the flow of fluid to be treated (F) as it passes from one groove (1d) to the next, and **in that** the at least one magnetic device (2) is arranged around the mixing element (1) at locations where there are no grooves (1d).

2. Device according to claim 1, **characterized in that** the South-North field lines generated by the magnetic devices (2) are oriented parallel to the longitudinal axis of the mixing element (1).

3. Device according to either claim 1 or 2, **characterized in that** the at least one magnetic device (2) comprises a plurality of ring-shaped permanent magnets (2a) with radial polarity, and at least one intermediate metal element (El).

4. Device according to any one of the preceding claims, **characterized in that** it comprises at least two magnetic assemblies (2) arranged on either side of the section of the mixing element (1) provided with grooves (1d) and of length (I), in such a way that the magnetic fields generated by the magnetic devices (2) interact with one another.

5. Device according to any one of the preceding claims, **characterized in that** the grooves (1d) of the mixing element (1) are paired in twos such that the orientations of the grooves (1d) within the same pair are reversed relative to one another.

6. Device according to any one of the preceding claims, **characterized in that** several sets of grooves (1d) are arranged along said mixing element (1) and are offset relative to one another.

7. Device according to any one of the preceding claims, **characterized in that** the grooves (1d) are helical in shape.

8. Device according to any one of claims 1 to 7, **characterized in that** the mixing element (1) is UV-transparent and **in that** said device (D) further comprises a UV irradiation module (3) arranged outside the mixing element (1).

9. Device according to claim 8, **characterized in that** the mixing element (1) is partially covered with a UV-reflective film and/or **in that** the walls of the UV irradiation module (3) surrounding the mixing element (1) are covered with such a UV-reflective film.

10. Device according to any one of claims 1 to 9, **characterized in that** it further comprises an analysis module (4) for at least one parameter in-line by means of an analysis device (5), and bypass pipes (40).

11. Device according to any one of claims 1 to 10, **characterized in that** said device is integrated into an existing installation.

12. A method for treating a fluid F using the device of any one of claims 1 to 11, comprising the step of:
a) supplying a mixing element (1) with the fluid to be treated (F),
b) passing the fluid to be treated (F) through a first magnetic field,
c) passing the fluid (F) through a plurality of sets of grooves (1d) so as to physically mix it,
d) passing the fluid to be treated (F) through a second magnetic field,
e) collecting the treated fluid (F').

13. Method according to claim 12, **characterized in that** the first and second magnetic fields have opposite polarities relative to one another.

14. Method according to claim 12 or 13, **characterized in that** the fluid to be treated is wine or a distilled spirit.

15. Method according to one of claims 12 to 14, **characterized in that** it comprises a step c') of UV irradiation of the product as it passes through said sets of grooves (1d).
